# EUROPEAN PATENT SPECIFICATION

(11) **EP 1 958 442 B1**
(45) Date of publication and mention of the grant of the patent: **20.02.2013**
(21) Application number: 06824084.5
(22) Date of filing: 11.12.2006
(51) Int. Cl.: H04N 21/2389, H04N 21/235, H04N 21/2362, H04N 21/2347, H04N 21/61

(54) **APPARATUS AND METHOD FOR CODING VIDEO, AUDIO AND ADDITIONAL DATA ACCORDING TO CONDITIONAL ACCESS OF TERRESTRIAL DMB AND CONDITIONAL ACCESS SYSTEM USING THE SAME**
VORRICHTUNG UND VERFAHREN ZUM CODIEREN VON VIDEO-, AUDIO- UND ZUSÄTZLICHEN DATEN GEMÄSS ZUGANGSBERECHTIGUNG FÜR TERRESTRISCHES DMB UND ZUGANGSBERECHTIGUNGSSYSTEM DAMIT
APPAREIL ET PROCEDE DE CODAGE DE DONNEES VIDEO, AUDIO ET ADDITIONNELLES EN FONCTION DE L'ACCES CONDITIONNEL DE DMB TERRESTRES ET SYSTEME D'ACCES CONDITIONNEL UTILISANT CET APPAREIL

(30) Priority: 09.12.2005 KR 20050120701; 07.03.2006 KR 20060021476
(43) Date of publication of application: 20.08.2008
(73) Proprietor: Electronics and Telecommunications Research Institute, Yuseong-gu Daejon 305-350 (KR)
(72) Inventor: LEE, Yong-Hoon, Daejon 305-251 (KR); LEE, Jin-Hwan, Daejon 305-345 (KR); LEE, Gwang-Soon, Daejon 305-330 (KR); AHN, Chung-Hyun, Daejon 305-340 (KR); LEE, Soo-In, Daejon 302-120 (KR)
(74) Representative: Betten & Resch
(86) International application number: PCT/KR2006/005378
(87) International publication number: WO 2007/067019

(56) References cited:
- JP-A- 2005 006 336
- JP-A- 2005 328 543
- KR-A- 20050 016 722
- KR-A- 20050 028 115
- KR-A- 20050 073 214
- US-A1- 2003 021 412
- JOUNGIL YUN ET AL: "Remultiplexing of ensemble transport interface for terrestrial DMB service", ETRI JOURNAL, ELECTRONICS AND TELECOMMUNICATIONS RESEARCH INSTITUTE, KR, vol. 27, no. 1, 1 February 2005 (2005-02-01), pages 102-105, XP008082208, ISSN: 1225-6463, DOI: DOI:10.4218/ETRIJ.05.0204.0041
- "Digital Audio Broadcasting (DAB); Conditional access; ETSI TS 102 367", ETSI STANDARDS, LIS, SOPHIA ANTIPOLIS CEDEX, FRANCE, vol. BC, no. V1.1.1, 1 January 2005 (2005-01-01), XP014027341, ISSN: 0000-0001
- CHANG S ET AL: "Performance evaluation of Eureka-147 with RS(204, 188) code for mobile multimedia broadcasting", VISUAL COMMUNICATIONS AND IMAGE PROCESSING; 8-7-2003 - 11-7-2003; LUGANO,, 8 July 2003 (2003-07-08), XP030080711,
- BUNGUM O W: "Transmultiplexing, transcontrol and transscrambling of MPEG-2/DVB signal", BROADCASTING CONVENTION, INTERNATIONAL (CONF. PUBL. NO. 428) AMSTERDAM, NETHERLANDS 12-16 SEPT. 1996, LONDON, UK,IEE, UK, 12 September 1996 (1996-09-12), pages 288-293, XP006510034, DOI: DOI:10.1049/CP:19960822 ISBN: 978-0-85296-663-1

## Description

### Technical Field

The present invention relates to a terrestrial digital multimedia Broadcasting (hereinafter, referred as "DMB") video service; and, more particularly, to an apparatus and a method for coding a video, an audio and additional data included in a terrestrial DMB according to a conditional access of the terrestrial DMB, and a conditional access system using the same.

### Background Art

In general, a conditional access system (CAS) allows a digital broadcasting receiver having an authorization to receive a specific broadcasting program and determine whether a specific broadcasting program is capable of being received or not.

Moreover, a conditional access system allows a receiver having a partial authorization of a plurality of services to conditionally receive a partial broadcasting program.

A conventional conditional access system is used in a cable and satellite broadcasting of a digital TV.

Document KR 2005 0016722, also published as EP 1 686 711 A2, is related to a conventional digital multimedia conditional access system (CAS), i. e., to a conditional access system related to a whole DMB video service, comprising video, audio and data services. It is related to solving the difficulty in providing an adequate broadcasting signal by installing repeaters in shadow areas and restricting reception billing to only the subscribers in the shadow areas. For that purpose the described CAS includes first and second communication networks, a mobile terminal for reproducing a DMB signal, a repeater for scrambling a (whole) transport stream (TS) received from a DMB transmission tower and transmitting the scrambled TS to the mobile terminal, and a server for providing a key for the scrambling to the repeater through the first communication network and to the mobile terminal through the second communication network.

Document US 2003/0021412 A1 is related to an encryption arrangement for multiple encryption of television programs. A system according to said document encrypts only a portion of the data required for full presentation of a television program to permit coexistence of multiple conditional access encryption systems associated with multiple manufacturer's set-top boxes within a single system. For this purpose PID mapping techniques are used to distinguish between multiple encryptions. Two (or more) audio or video streams may be transmitted encrypted according to the two (or more) encryption systems in use by a system's set-top boxes (STBs). In order for the two (or more) STBs to properly decrypt and decode their respective audio streams, Si (system information) data may be transmitted from a cable system's head-end that identifies a particular channel where the audio or video can be found using a transmitted Service Identifier to locate the audio or video. This may be accomplished by assigning the audio or video for system A is a first packet identifier (PID) and assigning the audio or video for system B a second packet identifier (PID). That means that the decrypting STBs, i.e. the receiving side, may access or decrypt their dedicated scrambled audio or video sub-streams based on PIDs. However, during a head-end partial encryption process, a packet is examined to determine if it meets a selection criterion for encryption. This selection criterion may be the presence of a PES (packetized elementary stream) header as a portion of the packet payload. If not, the packet is passed as a clear unencrypted packet (C) for insertion into the output data stream.

In JOUNGIL YUN ET AL. "Remultiplexing of ensemble transport interface for terrestrial DMB service", ETRI JOURNAL, ELECTRONICS AND TELECOMMUNICATIONS RESEARCH INSTITUTE, KR, vol. 27, no. 1, 1 February 2005, pages 102-105, a layered structure of the Korean terrestrial Digital Multimedia Broadcasting (T-DMB) transmission system for multimedia broadcasting service is presented. A device called the Ensemble Remultiplexer is introduced, which is designed to remultiplex the Ensemble Transport Interface (ETI) for T-DMB service. This document describes the remultiplexing process of the Ensemble remultiplexer.

In Digital Audio Broadcasting (DAB); Conditional access; ETSI TS 102 367", ETSI STANDARDS, LIS, SOPHIA ANTIPOUS CEDEX, FRANCE, vol. BC, no. V1.1.1, 1 January 2005, provides DAB with the ability to deliver encrypted services, both audio and data, both stream mode and packet mode, within a standardized framework and specifies how to use Conditional Access within the Digital Audio Broadcasting (DAB) system.

In CHANG S ET AL: "Performance evaluation of Eureka-147 with RS(204, 188) code for mobile multimedia broadcasting", VISUAL COMMUNICATIONS AND IMAGE PROCESSING; 8-7-2003 - 11-7-2003; LUGANO,. 8 July 2003, the digital multimedia broadcasting (DMB) system is introduced based on Eureka-147 that has been tentatively adopted in Korea. Since Eureka-147 is originally designed for broadcasting digital audio data, it provides a bit error rate (BER) of about 10⁻⁴ while the transmission of compressed video data, for example, requires the BER of about 10⁻⁸. To deal with this mismatch, the Korean DMB standard is considering the addition of the RS(204,188) coder to Eureka-147. In this document, the RS(204,188) coder is applied to the Eureka-147 and the simulation results are presented on the performance of this modified system at various transmission and protection modes.

A DMB represents a mobile multimedia broadcasting for providing a high quality of music and image service anywhere and anytime. A basic technique for regulations of the DMB is completed through a Eureka-147 digital audio broadcasting (DAB) project. A commercial DAB broadcasting starts from 1995 at Europe, and the development of a commercial transmitter and receiver is already matured.

As a technique and a service related to the DMB are developed, various additional services and business models are increased. Accordingly, new techniques which are not requested in a conventional audio broadcasting are needed, and a conditional access system is one example of new techniques.

Regulations, which are to be published or drafted in a domestic standard and a foreign standard, limit a conditional access in a sub channel, data groups or a multimedia object transfer (MOT) mode regarding a terrestrial DMB conditional access.

In a case of a terrestrial DMB, a conditional access for a DMB video service is performed based on the sub channel mode. However, the control access to each element of the video service, e.g., a video, an audio and additional data, is not yet performed.

Moreover, a current terrestrial DMB does not use a conditional access table (CAT) of program specific information (PSI) of an MPEG-2 transfer stream (TS) which is used in a conventional digital TV. The current terrestrial DMB analyzes a program map table (PMT), parses and scrambles a stream for a conditional access.

Hereafter, in a case of a terrestrial DMB video service, as new business models are generated according to various additional services, which includes a conditional access for a video and an audio, a conditional access for many services is needed.

Accordingly, in a case that a video, an audio and a data services included in a DMB video service as an example of various terrestrial DMB services are active, a conditional access system is needed for not a whole DMB video service but each of the video, audio and data services.

### Disclosure of Invention

### Technical Problem

It is, therefore, an object of the present invention to provide ... a conditional access system using an apparatus and a method for coding a video, an audio and additional data Included in a terrestrial DMB according to a conditional access of the terrestrial DMB.

### Technical Solution

In accordance with an embodiment of the present invention, there is provided a conditional access system for a terrestrial Digital Multimedia Broadcasting (DMB) video service comprising a video, an audio and an additional data service. The conditional access system comprises an additional data generating means for generating additional data, a media encoding means for encoding audio data, video data and the additional data generated in the additional data generating means. Further, the system comprises a conditional access coding processor for coding a conditional access for a requested stream of audio, video and additional data streams comprised by the terrestrial Digital Multimedia Broadcasting (DMB) video service, wherein the conditional access coding processor comprises an analyzing means for analyzing the packet identifiers (PID) of a video, an audio and an additional data stream included in an input stream, respectively. The conditional access coding processor also has a scrambling control means for selecting one of the video, audio and/or additional data streams to be scrambled according to a selection signal, and a transport stream de-multiplexing means for de-multiplexing the input stream received from the analyzing means, parsing an audio, a video and additional data stream classified by packet identifiers (PID), and outputting a stream to be scrambled, a stream not to be scrambled and the packet identifier (PID) for the stream to be scrambled according to selection of the scrambling control means. The conditional access coding processor further comprises a control word generating means for generating a control word, a scrambling means for scrabbling the stream to be scrambled which is outputted from the transport stream de-multiplexing means based on the control word generated in the control word generating means. The conditional access coding processor foresees a conditional access data generating means for receiving the control word from the control word generating means and generating conditional access data, and a transport stream re-multiplexing means for receiving and re-multiplexing the stream to be scrambled from the scrambling means, the stream not to be scrambled from the transport stream de-multiplexing means. The conditional access system further comprises a conditional access coding control means for receiving a control signal from the conditional access coding processing means, and transmitting the scrambling information and packet identifier information for the scrambled stream to an ensemble multiplexing means. An ensemble analyzing means may analyze ensemble information and transmit the analyzed ensemble information to the ensemble multiplexing means. A control word generating means may generate a control word and a scrambling means may scramble the ensemble stream from the ensemble analyzing means according to the control word. A synchronizing means may synchronize a conditional access coding signal according to the control signal from the ensemble multiplexing means, output the control word from the control word generating means to the scrambling means, and output a conditional access synchronizing parameter to the ensemble multiplexing means. A conditional access message coding means may code a conditional access message based on the control word from the synchronizing means, and output the coded conditional access message to the ensemble multiplexing means. The ensemble multiplexing means may receive and multiplex each information and stream from the conditional access coding processing means, the conditional access coding control means, the ensemble analyzing means, the scrambling means, the synchronizing means and the conditional access message coding means, and generate new ensemble data.

### Advantageous Effects

As mentioned above, the present invention allows a conditional access for a requested stream of a video, an audio and additional data included in a terrestrial DMB video service.

In a conditional access method in accordance with an embodiment of the present invention, a broadcaster provides a client with a higher value added charge broadcasting service as a business model, and the client receives a various and useful high quality DMB video service.

### Brief Description of the Drawings

The above and other objects and features of the present invention will become better understood with regard to the following description of the preferred embodiments given in conjunction with the accompanying drawings, in which:

Fig. 1 shows a conditional access system for a video, an audio and additional data of a terrestrial DMB in accordance with an embodiment of the present invention; and

Fig. 2 shows an apparatus for coding a video, an audio and additional data according to a conditional access of a terrestrial DMB in accordance with an embodiment of the present invention.

### Best Mode for Carrying Out the Invention

Hereinafter, an apparatus and a method for coding a video, an audio and additional data included in a terrestrial DMB according to a conditional access of the terrestrial DMB, and a conditional access system using the same in accordance with a preferred embodiment of the present invention will be described in more detail with reference to the accompanying drawings.

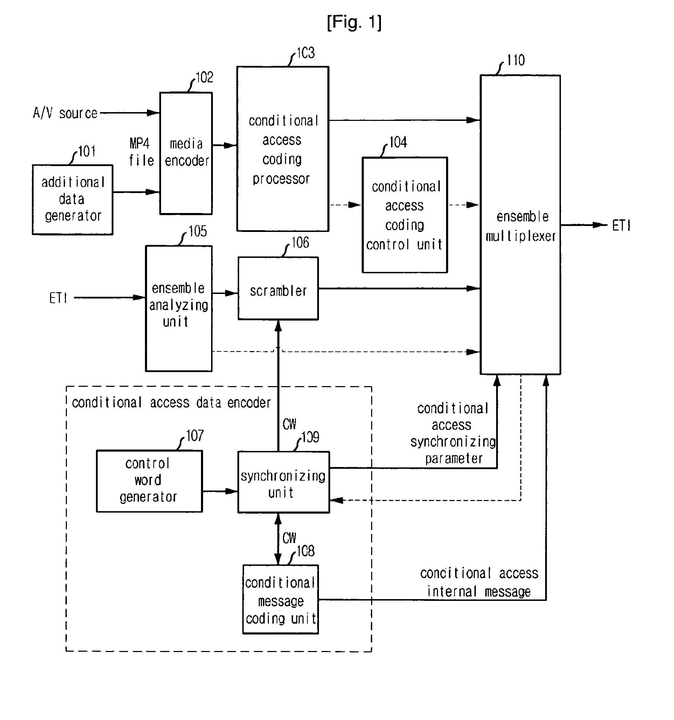

Fig. 1 shows a conditional access system for a video, an audio and additional data of a terrestrial DMB in accordance with an embodiment of the present invention.

As shown in Fig. 1, the conditional access system for a video, an audio and additional data of a terrestrial DMB includes an additional data generator 101, a media encoder 102, a conditional access coding processor 103, a conditional access coding control unit 104, an ensemble analyzing unit 105, a scrambler 106, a control word generator 107, a conditional access message coding unit 108, a synchronizing unit 109, and an ensemble multiplexer 110.

The additional data generator 101 generates additional data outputs the generated additional data to a moving picture experts group 4 (MPEG)-4 file.

The media encoder 102 encodes an audio and a video source inputted from an external device and the additional data source generated in the additional data generator 101.

The conditional access coding processor 103 codes a requested stream of the audio, video and additional data encoded in the media encoder 102 according to a conditional access for the stream.

The conditional access coding control unit 104 receives a control signal from the conditional access coding processor 103. The conditional access coding control unit 104 transfers packet identifier information (PID) for a scrambled stream and information, which determine whether each component of the audio, video and additional data included in a DMB video service is scrambled or not, to the ensemble multiplexer 110.

After the ensemble analyzing unit 105 analyzes ensemble information inputted as an ensemble transport stream (ETI) signal from an external device, and the ensemble analyzing unit 105 transfers the analyzed ensemble information to the ensemble multiplexer 110 via the scrambler 106 based on a control signal.

The scrambler 106 scrambles an ensemble stream inputted from the ensemble analyzing unit 105 by a control word (CW).

The control word generator 107 generates and outputs a control word (CW) to the synchronizing unit 109.

The conditional access message coding unit 108 codes an internal message of a conditional access by using the control word (CW) of the synchronizing unit 109 as a coding key, and outputs the coded internal message of conditional access to the ensemble multiplexer 110.

The synchronizing unit 109 receives the control signal from the ensemble multiplexer 110 and synchronizes the control signal based on a signal of each block related to a conditional access coding. The synchronizing unit 109 outputs the control word (CW) from the control word generator 107 to the conditional access message coding unit 108 and the scrambler 106. The synchronizing unit 109 outputs a conditional access synchronization parameter to the ensemble multiplexer 110.

The ensemble multiplexer 110 receives and multiplexes from each information and stream from the conditional access coding processing means, the conditional access coding control means, the ensemble analyzing means, the scrambling means, the synchronizing means and the conditional access message coding means based on a control signal. The ensemble multiplexer 110 generates and outputs new ensemble data.

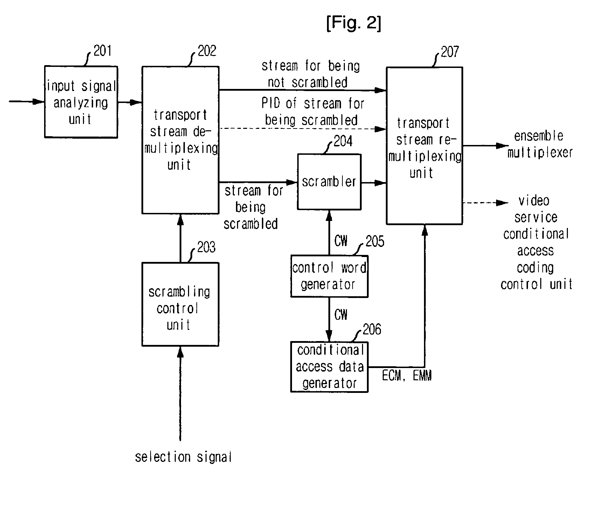

Subsequently, referring to Fig. 2, a configuration and an operation of a conditional access coding processor of the DMB video service will be described as following.

Fig. 2 shows an apparatus for coding a video, an audio and additional data according to a conditional access of a terrestrial DMB in accordance with an embodiment of the present invention.

As shown, the apparatus for coding a video, an audio and additional data according to a conditional access of a terrestrial DMB includes an input signal analyzing unit 201, a transport stream de-multiplexing unit 202, a scrambling control unit 203, a scrambler 204, a control word (CW) generator 205, a conditional access data generator 206 and a transport stream re-multiplexing unit 207.

The input signal analyzing unit 201 analyzes the stream received from the media encoder 102 and outputs the analyzed stream to the transport stream de-multiplexing unit 202.

After the transport stream de-multiplexing unit 202 de-multiplexes the analyzed stream received from the input signal analyzing unit 201 and parses an audio, a video and additional data which are included in a video service and classified by a packet identifier (PID), the transport stream de-multiplexing unit 202 outputs the selected stream by the scrambling control unit 203 to the scrambler 204. The transport stream de-multiplexing unit 202 outputs the other streams, which are not selected by the scrambling control unit 202, and the PID information of a stream for being scrambled to the transport stream re-multiplexing unit 207.

The scrambling control unit 203 selects a stream to be scrambled from the audio, video and additional data which are included in the video service according to a selection signal of a broadcasting service operator. The scrambling control unit 203 transfers the selected stream to the transport stream de-multiplexing unit 202 based on a control signal.

The scrambler 204 scrambles the selected stream by the scrambling control unit 203 of the parsed stream in the transport stream de-multiplexing unit 202 through the control word (CW).

The control word generator 205 generates a control word (CW) for operating the scrambler 204.

The conditional access data generator 206 receives the control word (CW) from the control word generator 205. The conditional access data generator 206 generates conditional access data such as an entitlement control message (ECM) and an entitlement management message (EMM) to be decoded for an authorized receiver.

The transport stream re-multiplexing unit 207 receives and re-multiplexes the scrambled data in the scrambler 204 of the video, audio and additional data included in the video service, the other streams which are not scrambled from the transport stream de-multiplexing unit 202, and the conditional access data from the conditional access data generator 206. The transport stream re-multiplexing unit 207 outputs the re-multiplexed scrambled data, non-scrambled streams, and conditional access data to the ensemble multiplexer 110. The transport stream re-multiplexing unit 207 transfers the scrambling information of the DMB video service and the packet identifier (PID) information of the stream to be scrambled to the conditional access coding control unit 104 through the control signal.

An embodiment of a scrambling process is described in details as below.

First, if the PID is analyzed at a transport stream (TS) level in a transport de-multiplexing process, streams for a video, an audio and additional data included in a video service are parsed. The other streams except three kinds of streams included in the video service are excluded from objects to be scrambled.

For example, if a stream for additional data service of a video service is scrambled, a PID related to a binary format for scene (BIFS) is parsed at a transport stream (TS) level. The transport stream (TS) or an element stream (ES) is streamed and re-multiplexed with streams including the remaining video, audio, extra streams, which is related to a PAT and a PMT, and conditional access data including an ECM and an EMM.

Meanwhile, the ensemble multiplexer 110 multiplexes the re-multiplexed transport streams inputted from the conditional access coding processor 103 and the ensemble stream inputted from the scrambler 106. The conditional access mode of the terrestrial DMB includes a sub-channel conditional access, a data group conditional access and MOT conditional access.

However, when a different mode is serviced in addition, a "proprietary conditional access" mode includes a field having a "reserved" mode. If a conditional access for a partial stream is adapted in a DMB video service, a mode is set by selecting fields in a new conditional mode. When the "reserved" mode is used, a mode name is may be changed. For example, the "reserved" mode may be changed to "video service conditional access" mode in a video service, or the "reserved" mode is may be changed to "additional data service conditional access" mode in an additional data service.

The method of the present invention as mentioned above may be implemented by a software program and stored in a computer-readable storage medium such as CD-ROM, RAM, ROM, floppy disk, hard disk, optical magnetic disk, etc. This process may be readily carried out by those skilled in the art; and therefore, details of thereof are omitted here.

While the present invention has been described with respect to certain preferred embodiments, it will be apparent to those skilled in the art that various changes and modifications may be made without departing from the spirits and scope of the invention as defined in the following claims.

## Claims

1. A conditional access system for a terrestrial Digital Multimedia Broadcasting (DMB) video service comprising a video, an audio and an additional data service, the conditional access system comprising:
an additional data generating means (101) for generating additional data;
a media encoding means (102) for encoding audio data, video data and the additional data generated in the additional data generating means (101);
a conditional access coding processor (103) for coding a conditional access for a requested stream of audio, video and additional data streams comprised by the terrestrial Digital Multimedia Broadcasting (DMB) video service, wherein the conditional access coding processor (103) comprises:
an analyzing means (201) for analyzing an input stream;
a scrambling control means (203) for selecting one of the video, audio and/or additional data streams to be scrambled according to a selection signal;
a transport stream de-multiplexing means (202) for de-multiplexing the input stream received from the analyzing means (201), parsing an audio, a video and additional data stream classified by packet identifiers (PID), and outputting a stream to be scrambled, a stream not to be scrambled and the packet identifier (PID) for the stream to be scrambled according to selection of the scrambling control means (203);
a control word generating means (205) for generating a control word (CW);
a scrambling means (204) for scrambling the stream to be scrambled which is outputted from the transport stream de-multiplexing means (202) based on the control word (CW) generated in the control word generating means (205);
a conditional access data generating means (206) for receiving the control word (CW) from the control word generating means (205) and generating conditional access data (ECM; EMM); and
a transport stream re-multiplexing means (207) for receiving and re-multiplexing the stream to be scrambled from the scrambling means (204), the stream not to be scrambled from the transport stream de-multiplexing means;
the conditional access system further comprising:
a conditional access coding control means (104) for receiving a control signal from the conditional access coding processing means (103), and transmitting the scrambling information and packet identifier (PID) information for the scrambled stream to an ensemble multiplexing means (110);
an ensemble analyzing means (105) for analyzing ensemble information and transmitting the analyzed ensemble information to the ensemble multiplexing means (110);
a control word generating means (107) for generating a control word (CW);
a scrambling means (106) for scrambling the ensemble stream from the ensemble analyzing means (105) according to the control word (CW):
a synchronizing means (109) for synchronizing a conditional access coding signal according to the control signal from the ensemble multiplexing means (110), outputting the control word (CW) from the control word generating means (107) to the scrambling means (106), and outputting a conditional access synchronizing parameter to the ensemble multiplexing means (110);
a conditional access message coding means (108) for coding a conditional access message based on the control word (CW) from the synchronizing means (109), and outputting the coded conditional access message to the ensemble multiplexing means (110); and
the ensemble multiplexing means (110) for receiving and multiplexing each information and stream from the conditional access coding processing means (103), the conditional access coding control means (104), the ensemble analyzing means (105), the scrambling means (106), the synchronizing means (109) and the conditional access message coding means (108), and generating new ensemble data.

2. The conditional access system as recited in claim 1, wherein the transport stream de-multiplexing means (202) outputs the selected streams by the scrambling control means (203) to the scrambling means (204), and outputs the other streams not selected by the scrambling control means (203) and the PID information of a stream to be scrambled to the transport stream re-multiplexing means (207).

3. The conditional access system as recited in claim 1, wherein the conditional access data generating means generates an entitlement control message (ECM) and an entitlement management message (EMM) allowed to be decoded by a receiver having an authorization.

4. The conditional access system as recited in claim 1, wherein the transport stream re-multiplexing means (207) re-multiplexes and outputs the stream scrambled in the scrambling means (204), the stream not scrambled in the transport stream de-multiplexing means (202), and the conditional access data (ECM; EMM) including an ECM and an EMM from the conditional access data generating means (206) to an ensemble multiplexing means (105).

5. The conditional access system as recited in claim 1, wherein the transport stream re-multiplexing means (207) outputs scrambling information of a DMB video service and packet identifier (PID) information of the scrambled stream to a conditional access coding control means (104) according to a control signal.

6. The conditional access system as recited in claim 1, wherein the ensemble multiplexing means (110) multiplexes packet identifier (PID) information for the scrambled stream transmitted from the conditional access coding control means (104), forms and outputs new conditional access mode from the group of : sub-channel conditional access mode, data group conditional access mode, Multimedia Object Transfer (MOT) conditional access mode, and an additional conditional access mode.

7. The conditional access system as recited in claim 6, wherein the ensemble multiplexing means (110) forms the additional conditional access mode through a field of a proprietary conditional access mode.

8. The conditional access system as recited in claim 6, wherein the ensemble multiplexing means (110) forms the additional conditional access mode through a field of a reserved mode.

## Patentansprüche

1. System für bedingten Zugang für einen terrestrischen digitalen Multimedia-Rundsende-Videodienst (DMB-Videodienst), der einen Video- und einen Audiodienst sowie einen Dienst für zusätzliche Daten enthält, wobei das System für bedingten Zugang umfasst:
ein Zusatzdaten-Erzeugungsmittel (101) zum Erzeugen zusätzlicher Daten;
ein Mediencodierungsmittel (102) zum Codieren von Audiodaten, Videodaten und den zusätzlichen Daten, die in dem Zusatzdaten-Erzeugungsmittel (101) erzeugt werden;
einen Codierungsprozessor (103) für bedingten Zugang zum Codieren eines bedingten Zugangs zu einem angeforderten Audio- und Videostrom und Strömen zusätzlicher Daten, die der terrestrische digitale Multimedia-Rundsende-Videodienst (DMB-Videodienst) enthält, wobei der Codierungsprozessor (103) für bedingten Zugang umfasst:
ein Analysemittel (201) zum Analysieren eines Eingangsstroms;
ein Verwürfelungssteuermittel (203) zum Wählen des Video- und/oder Audiostroms und/oder der Ströme zusätzlicher Daten, die verwürfelt werden sollen, in Übereinstimmung mit einem Auswahlsignal;
einem Transportstrom-Demultiplexierungsmittel (202) zum Demultiplexieren des Eingangsstroms, der von dem Analysemittel (201) empfangen wird, zum Parsen eines Audio- und eines Videostroms und von Strömen zusätzlicher Daten, die durch Paketidentifizierer (PID) klassifiziert werden, und zum Ausgeben eines zu verwürfelnden Stroms, eines nicht zu verwürfelnden Stroms und des Paketidentifizierers (PID) für den zu verwürfelnden Strom in Übereinstimmung mit der Auswahl des Verwürfelungssteuermittels (203);
ein Steuerwort-Erzeugungsmittel (205) zum Erzeugen eines Steuerworts (CW);
ein Verwürfelungsmittel (204) zum Verwürfeln des zu verwürfelnden Stroms, der von dem Transportstrom-Demultiplexierungsmittel (202) ausgegeben wird, anhand des in dem Steuerwort-Erzeugungsmittel (205) erzeugten Steuerworts (CW);
ein Datenerzeugungsmittel (206) für bedingten Zugang zum Empfangen des Steuerworts (CW) von dem Steuerwort-Erzeugungsmittel (205) und zum Erzeugen von Daten (ECM; EMM) für bedingten Zugang; und
ein Transportstrom-Neumultiplexierungsmittel (207) zum Empfangen und erneuten Multiplexieren des zu verwürfelnden Stroms von dem Verwürfelungsmittel (204) und des nicht zu verwürfelnden Stroms von den Transportstrom-Demultiplexierungsmitteln;
wobei das System für bedingten Zugang ferner umfasst: ein Codierungssteuermittel (104) für bedingten Zugang zum Empfangen eines Steuersignals von dem Codierungsverarbeitungsmittel (103) für bedingten Zugang und zum Senden der Verwürfelungsinformationen und der Paketidentifiziererinformationen (PID-Informationen) für den verwürfelten Strom zu einem Ensemble-Multiplexierungsmittel (110);
ein Ensemble-Analysemittel (105) zum Analysieren von Ensemble-Informationen und zum Senden der analysierten Ensemble-Informationen zu dem Ensemble-Multiplexierungsmittel (110);
ein Steuerwort-Erzeugungsmittel (107) zum Erzeugen eines Steuerworts (CW);
ein Verwürfelungsmittel (106) zum Verwürfeln des Ensemble-Stroms von den Ensemble-Analysemitteln (105) in Übereinstimmung mit dem Steuerwort (CW);
ein Synchronisationsmittel (109) zum Synchronisieren des Codierungssignal für bedingten Zugang in Übereinstimmung mit dem Steuersignal von dem Ensemble-Multiplexierungsmittel (110), zum Ausgeben des Steuerworts (CW) von dem Steuerwort-Erzeugungsmittels (107) zu dem Verwürfelungsmittel (106) und zum Ausgeben eines Synchronisationsparameters für bedingten Zugang zu dem Ensemble-Multiplexierungsmittel (110);
ein Nachrichtencodierungsmittel (108) für bedingten Zugang zum Codieren einer Nachricht für bedingten Zugang anhand des Steuerworts (CW) von dem Synchronisationsmittel (109) und zum Ausgeben der codierten Nachricht für bedingten Zugang zu dem Ensemble-Multiplexierungsmittel (110); und
das Ensemble-Multiplexierungsmittel (110) zum Empfangen und Multiplexieren sämtlicher Informationen und jedes Stroms von den Codierungsverarbeitungsmitteln (103) für bedingten Zugang, dem Codierungssteuermittel (104) für bedingten Zugang, dem Ensemble-Analysemittel (105), dem Verwürfelungsmittel (106), dem Synchronisationsmittel (109) und dem Nachrichtencodierungsmittel (108) für bedingten Zugang und zum Erzeugen neuer Ensemble-Daten.

2. System für bedingten Zugang nach Anspruch 1, wobei das Transportstrom-Demultiplexierungsmittel (202) die durch das Verwürfelungssteuermittel (203) ausgewählten Ströme zu dem Verwürfelungsmittel (204) ausgibt und die nicht durch das Verwürfelungssteuermittel (203) ausgewählten anderen Ströme sowie die PID-Informationen eines zu verwürfelnden Stroms zu dem Transportstrom-Neumultiplexierungsmittel (207) ausgibt.

3. System für bedingten Zugang nach Anspruch 1, wobei das Datenerzeugungsmittel für bedingten Zugang eine Berechtigungssteuernachricht (ECM) und eine Berechtigungsmanagementnachricht (EMM) erzeugt, die von einem berechtigten Empfänger decodiert werden dürfen.

4. System für bedingten Zugang nach Anspruch 1, wobei das Transportstrom-Neumultiplexierungsmittel (207) den in dem Verwürfelungsmittel (204) verwürfelten Strom, den in dem Transportstrom-Demultiplexierungsmittel (202) nicht verwürfelten Strom und die Daten (ECM; EMM) für bedingten Zugang, die eine ECM und eine EMM von dem Datenerzeugungsmittel (206) für bedingten Zugang enthalten, erneut multiplexiert und zu einem Ensemble-Multiplexierungsmittel (105) ausgibt.

5. System für bedingten Zugang nach Anspruch 1, wobei das Transportstrom-Neumultiplexierungsmittel (207) Verwürfelungsinformationen eines DMB-Videodiensts und Paketidentifizierer-Informationen (PID-Informationen) des verwürfelten Stroms zu einem Codierungssteuermittel (104) für bedingten Zugang in Übereinstimmung mit einem Steuersignal ausgibt.

6. System für bedingten Zugang nach Anspruch 1, wobei das Ensemble-Multiplexierungsmittel (110) Paketidentifizierer-Informationen (PID-Informationen) für den von dem Codierungssteuermittel (104) für bedingten Zugang gesendeten verwürfelten Strom multiplexiert und einen neuen Modus für bedingten Zugang aus der Gruppe, die besteht aus: Unterkanal-Modus für bedingten Zugang, Datengruppen-Modus für bedingten Zugang, Multimediaobjektübertragungs-Modus (MOT-Modus) für bedingten Zugang und zusätzlichen Modus für bedingten Zugang, bildet und ausgibt.

7. System für bedingten Zugang nach Anspruch 6, wobei das Multiplexierungsmittel (110) den Zusatzmodus für bedingten Zugang durch ein Feld eines Eigentumsmodus für bedingten Zugang bildet.

8. System für bedingten Zugang nach Anspruch 6, wobei das Ensemble-Multiplexierungsmittel (110) den Zusatzmodus für bedingten Zugang durch ein Feld eines reservierten Modus bildet.

## Revendications

1. Système d'accès conditionnel pour un service vidéo de radiodiffusion multimédia numérique (DMB) terrestre comprenant un service vidéo, audio et de données supplémentaires, le système d'accès conditionnel comprenant :
un moyen de génération de données supplémentaires (101) permettant de générer des données supplémentaires ;
un moyen d'encodage de média (102) permettant d'encoder des données audio, des données vidéo et les données supplémentaires générées dans le moyen de génération de données supplémentaires (101) ;
un processeur de codage d'accès conditionnel (103) permettant de coder un accès conditionnel pour un flux requis de flux audio, vidéo et de données supplémentaires compris dans le service vidéo de radiodiffusion multimédia numérique (DMB) terrestre, dans lequel le processeur de codage d'accès conditionnel (103) comprend :
un moyen d'analyse (201) permettant d'analyser un flux d'entrée ;
un moyen de commende de brouillage (203) permettant de sélectionneur l'un des flux vidéo, audio et/ou de données supplémentaires à brouiller selon un signal de sélection ;
un moyen de démultiplexage de flux de transport (202) permettant de démultiplexer le flux d'entrée reçu en provenance du moyen d'analyse (201), d'analyser un flux audio, vidéo et de données supplémentaires classifié par des identifiants de paquet (PID), et d'émettre en sortie un flux devant être brouillé, un flux ne devant pas être brouillé et l'identifiant de paquet (PID) pour le flux devant être brouillé selon une sélection du moyen de commande de brouillage (203) ;
un moyen de génération de mot de commende (205) permettant de générer un mot de commande (CW) ;
un moyen de brouillage (204) permettant de brouiller le flux devant être brouillé qui est émis en sortie depuis le moyen de démultiplexage de flux de transport (202) en se basant sur le mot de commande (CW) généré dans le moyen de génération de mot de commande (205) ;
un moyen de génération de données d'accès conditionnel (206) permettant de recevoir le mot de commande (CW) en provenance du moyen de génération de mot de commande (205) et générer des données d'accès conditionnel (ECM ; EMM) ; et
un moyen de remultiplexage de flux de transport (207) permettant de recevoir et de remultiplexer le flux devant être brouillé en provenance du moyen de brouillage (204), le flux ne devant pas être brouillé en provenance du moyen de démultiplexage de flux de transport ;
le système d'accès conditionnel comprenant en outre :
un moyen de commande de codage d'accès conditionnel (104) permettant de recevoir un signal de commande en provenance du moyen de traitement de codage d'accès conditionnel (103) et de transmettre les informations de brouillage et les informations d'identifiant de paquet (PID) pour le flux brouillé vers un moyen de multiplexage d'ensemble (110) ;
un moyen d'analyse d'ensemble (105) permettant d'analyser des informatisons d'ensemble et de transmettre les informations d'ensemble analysées au moyen de multiplexage d'ensemble (110) ;
un moyen de génération de mot de commande (107) permettant de générer un mot de commande (CW) ;
un moyen de brouillage (106) permettant de brouiller le flux d'ensemble provenant du moyen d'analyse d'ensemble (105) selon le mot de commande (CW) ;
un moyen de synchronisation (109) permettant de synchroniser un signal de codage d'accès conditionnel selon le signal de commande en provenance du moyen de multiplexage d'ensemble (110), d'émettre en sortie le mot de commande (CW) en provenance du moyen de génération de mot de commande (107) vers le moyen de brouillage (106), et d'émettre en sortie un paramètre de synchronisation d'accès conditionnel vers le moyen de multiplexage d'ensemble (110) ;
un moyen de codage de message d'accès conditionnel (108) permettant de coder un message d'accès conditionnel en se basant sur le mot de commande (CW) en provenance du moyen de synchronisation (109), et d'émettre en sortie le message d'accès conditionnel codé vers le moyen de multiplexage d'ensemble (110) ; et
le moyen de multiplexage d'ensemble (110) permettant de recevoir et de multiplexer chaque information et flux en provenance du moyen de traitement de codage d' accès conditionnel (103), du moyen de commande de codage d'accès conditionnel (104), du moyen d'analyse d'ensemble (105), du moyen de brouillage (106), du moyen de synchronisation (109) et du moyen de codage de message d'accès conditionnel (108) et de générer de nouvelles données d'ensemble.

2. Système d'accès conditionnel selon la revendication 1, dans lequel le moyen de démultiplexage de flux de transport (202) émet en sortie les flux sélectionnés par le moyen de commande de brouillage (203) vers le moyen de brouillage (204), et émet en sortie les autres flux non sélectionnés par le moyen de commande de brouillage (203) et les informations de PID d'un flux devant être brouillé vers le moyen de remultiplexage de flux de transport (207).

3. Système d'accès conditionnel selon la revendication 1, dans lequel le moyen de génération de données d'accès conditionnel génère un message de contrôle de droit (ECM) et un message de gestion de droit (EMM) pouvant être décodé par un récepteur ayant une autorisation.

4. Système d'accès conditionnel selon la revendication 1, dans lequel le moyen de remultiplexage de flux de transport (207) remultiplexe et émet en sortie le flux brouillé dans le moyen de brouillage (204), le flux non brouillé dans le moyen de démultiplexage de flux de transport (202), et les données d'accès conditionnel (ECM ; EMM) comprenant un ECM et un EMM en provenance du moyen de génération de données d'accès conditionnel (206) vers un moyen de multiplexage d'ensemble (105).

5. Système d'accès conditionnel selon la revendication 1, dans lequel le moyen de remultiplexage de flux de transport (207) émet en sortie des informations de brouillage d'un service vidéo DMB et des informations d'identifiant de paquet (PID) du flux brouillé vers un moyen de commande de codage d'accès conditionnel (104) selon un signal de commande.

6. Système d'accès conditionnel selon la revendication 1, dans lequel le moyen de multiplexage d'ensemble (110) multiplexe des informations d'identifiant de paquet (PID) pour le flux de brouillage transmis en provenance du moyen de commande de codage d'accès conditionnel (104), forme et émet en sortie un nouveau mode d'accès conditionnel provenant du groupe consistant en : un mode d'accès conditionnel de sous-canal, un mode d'accès conditionnel de groupe de données, un mode d'accès conditionnel de transfert d'objets multimédia (MOT), et un mode d'accès conditionnel supplémentaire.

7. Système de mode d'accès conditionnel selon la revendication 6, dans lequel le moyen de multiplexage d'ensemble (110) forme le mode d'accès conditionnel supplémentaire via un champ d'un mode d'accès conditionnel propriétaire.

8. Système d'accès conditionnel selon la revendication 6, dans lequel le moyen de multiplexage d'ensemble (110) forme le mode d'accès conditionnel supplémentaire via un champ d'un mode réservé.
